Europäisches Patentamt

European Patent Office

Office européen des brevets

(19)

(11) Veröffentlichungsnummer: **0 312 861**
**A1**

(12) # EUROPÄISCHE PATENTANMELDUNG

(21) Anmeldenummer: **88116712.6**

(22) Anmeldetag: **08.10.88**

(51) Int. Cl.⁴: **B23K 7/10** , **B23Q 3/155**

(30) Priorität: **21.10.87 DE 3735598**

(43) Veröffentlichungstag der Anmeldung:
**26.04.89 Patentblatt 89/17**

(84) Benannte Vertragsstaaten:
**FR GB IT SE**

(71) Anmelder: **MESSER GRIESHEIM GMBH**
**Hanauer Landstrasse 330**
**D-6000 Frankfurt/Main 1(DE)**

(72) Erfinder: **Mehner, Götz**
**Wiesenstrasse 36**
**D-6108 Weiterstadt(DE)**
Erfinder: **Nicolai, Manfred, Dr.**
**Grubenstieg 8**
**CH-8200 Schaffhausen(CH)**

(54) **Verfahren und Einrichtung zum automatischen Wechseln von Schneiddüsen.**

(57) Verfahren zum automatischen Wechseln von Schneiddüsen, bei dem die Maschinensteuerung unter Benutzung der drei Bewegungsachsen der Maschine die Brenner zu einem Düsenlager verfährt, über der Entladestelle und danach der Ladestelle der erforderlichen Düse positioniert und das Lösen bzw. Befestigen der Düsen durch die Höhenbewegung des Brenners durchführt.

FIG.2

EP 0 312 861 A1

## Verfahren und Einrichtung zum automatischen Wechseln von Schneiddüsen

Die Erfindung bezieht sich auf das automatische Wechseln von Düsen, die beim Brennschneiden verwendet werden, insbesondere bei Maschinen mit mehreren gleichzeitig arbeitenden Brennern.

Die Automatisierung des Werkzeugwechsels, insbesondere bei spanenden Werkzeugmaschinen, ist bekannt. Sie führt zur Senkung der Rüstzeiten und damit zur effektiven Nutzung der Maschinen sowie zur schnelleren Anpassungsfähigkeit an rasch wechselnde Fertigungsaufgaben. Spanende Werkzeugmaschinen haben üblicherweise nur einen Werkzeugaufnahmekopf, der mit unterschiedlichen nacheinander oder gleichzeitig arbeitenden Werkzeugen ausgerüstet ist. Der Werkzeugwechsel erfolgt nach Beendigung der Bearbeitung einer Serie, selten während der Bearbeitung eines Stückes.

Im Unterschied dazu sind bei Brennschneidmaschinen zum Autogen- oder Plasmaschneiden, insbesondere bei Maschinen mit großer Portalbreite, mehrere Werkzeugaufnahmeköpfe = Schneidbrenner angeordnet, zum Teil bis zu 20 Stück. Das Wechseln der Düsen ist notwendig, wenn der Schneidbe-reich der Düse aufgrund dickerer oder dünnerer Bleche nicht mehr ausreicht oder eine Düse durch Metallspritzer oder Verschleiß ausfällt.

Durch die DE-OS 34 47 304 ist es bei Brennschneidmaschinen bekannt, an der Brennschneidmaschine ein Düsenmagazin zu befestigen, in dem sich neue bzw. andere Düsen befinden. Die Bereitstellung der jeweils richtigen Düse im Düsenmagazin erfolgt durch die Steuerung der Maschine. Dieses Magazin ist als Ketten- oder Revolvermagazin ausgebildet. Eine andere Magazin-Ausführung weist eine Scheibe auf, in der kreisförmig die neuen Düsen von Hand angeordnet sind. Zum Wechseln der Düsen ist auch ein um 180° schwenkbarer Doppelgreifer bekannt.

Aufgabe der Erfindung ist die Verbesserung des Düsenwechsels, insbesondere in der Weise, daß an mehreren Brennern gleichzeitig die Düsen gewechselt werden können und auch ein Einzelwechsel möglich ist. Ferner ist es Aufgabe der Erfindung die Wechseleinrichtung zu vereinfachen.

Ausgehend von dem im Oberbegriff des Anspruches 1 genannten Stand der Technik wird die Aufgabe durch die im kennzeichnenden Teil des Anspruches 1 aufgeführten Merkmale gelöst.

In den Unteransprüchen sind vorteilhafte Weiterbildungen des Verfahrens und die Einrichtung zur Durchführung des Verfahrens beschrieben.

Zum Brennschneiden werden überwiegend Injektordüsen verwendet. Diese bestehen aus zwei Teilen, der Schneiddüse und der Heizkappe, die nacheinander in den Brenner eingeschraubt werden. Ferner gibt es gasemischende Düsen, die ein- oder zweiteilig ausgebildet sind und einen gemeinsamen Dichtkonus mit Überwurfmutter aufweisen.

Die stark wechselnden Temperaturen, der Verschleiß an den Düsen und der unterschiedliche Zustand der Dichtflächen machen es unmöglich, ein Anzugsmoment für die Düsen vorzugeben, das die Gasdichtheit sicherstellt. Die dichte Abtrennung der Gaskanäle muß aber auf jeden Fall gewährleistet sein, um unkontrolliertes Brennen, Flammrückschläge oder Explosionen zu verhindern. Für einen automatischen Düsenwechsel ist es daher unabdingbar, die Gasdichtheit vor dem Arbeitsbeginn sicherzustellen.

Einzelheiten und Vorteile der Erfindung sind an Hand von Ausführungsbeispielen nachfolgend erläutert.

Fig. 1 zeigt die Frontansicht einer Brennschneidmaschine,

Fig. 2 zeigt einen Teil der Frontansicht beim Düsenwechsel,

Fig. 3 eine Draufsicht auf das Düsenlager,

Fig. 4 eine Aufnahme mit eingesetzter Düse im Brenner sowie die Arretiervorrichtung für die Aufnahme,

Fig. 5 den gleichen Brenner mit anderer Arretiervorrichtung.

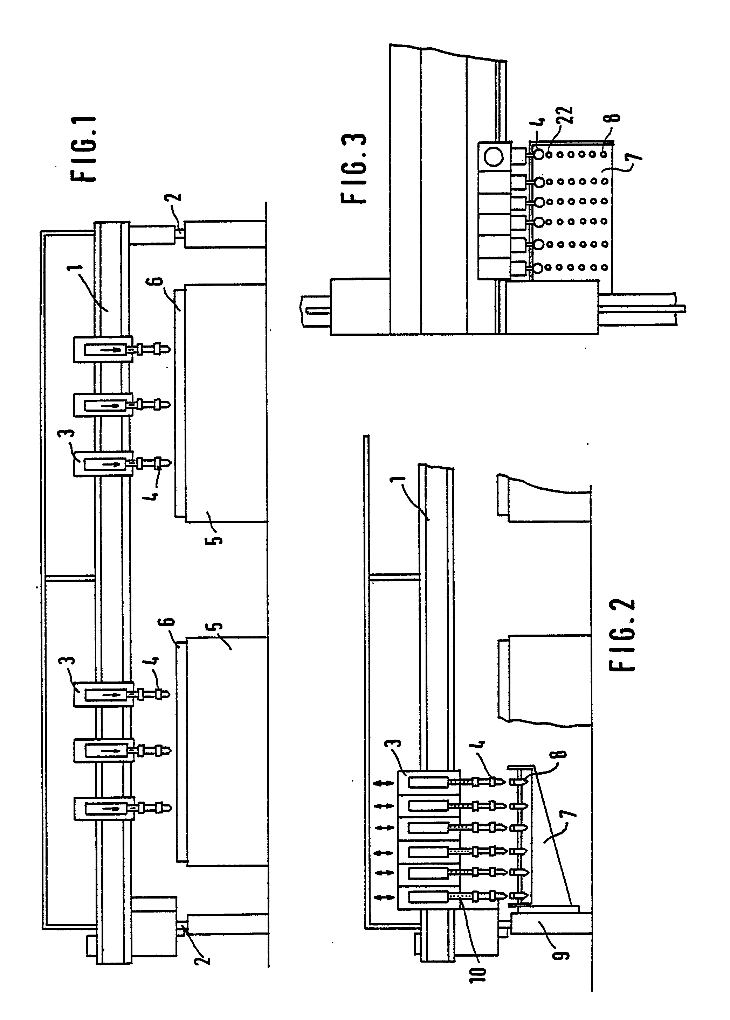

Die Brennschneidmaschine gemäß Fig. 1 besteht aus einem Portal 1, das aus Schienen 2 verfahrbar ist. Auf dem Portal 1 sind mehrere Querwagen 3 quer zur Portalfahrrichtung bewegbar. An den Querwagen 3 sind je ein Schneidbrenner 4 höhenverstellbar angeordnet. Unter den Brennern 4 befinden sich Schneidtische 5, auf denen die zu schneidenden Bleche 6 liegen.

Die Steuerung des Antriebs der Maschine in ihren drei Fahrtrichtungen erfolgt fotoelektrisch oder über eine NC bzw. CNC-Steuerung. Der Abstand der Brenner 4 vom Blech 6 erfolgt über eine Düsenabstandssteuerung, meist kapazitiver Art. Eine solche Steuerung ist beispielsweise in der DE-OS 37 00 643 beschrieben.

In Fig. 2 sind alle sechs Brenner 4 zu einer bestimmten Stelle des Portals 1 verfahren worden, nämlich auf eine Seite. Die Brenner 4 weisen auch einen bestimmten Abstand zueinander auf, ihre Querwagen 3 sind aneinandergestoßen.

Die sechs Brenner 4 wurden von der Maschine zu einem Düsenlager 7 gefahren, in dem sich sechs Reihen von Düsen 8 befinden. Das Düsenlager 7 ist an dem Schienenfundament 9 befestigt.

Die Fig. 3 zeigt ein Düsenlager 7 mit den Düsen 8 und den über dem Düsenlager 7 stehenden Brennern 4. Damit ist ein gemeinsames Düsenlager 7 für alle Brenner 4 dargestellt.

Der Düsenwechsel geschieht wie folgt:

Das Portal 1 fährt mit den zusammengeschobenen Querwagen 3 soweit über das Düsenlager 7, daß die Brenner 4 sich über der ersten Lagerreihe befinden. Mittels der an den Querwagen 3 befindlichen Brennerhöhenverstellungen 10, z.B. eines Zahnstangenantriebes, werden die Brenner 4 nach unten gefahren. Die Steuerung dieser Bewegung kann über Endschalter erfolgen. Vorteilhafterweise wird hierzu aber der kapazitive Höhensensor verwendet, der vorher seitlich weggeschwenkt wurde. Wenn die Düsen 8 die Lagerstellen erreicht haben, wird die Bewegung gestoppt, wobei mittels je einer Löse-Füge-Vorrichtung die Düsen 8 von den Brennern 4 gelöst werden. Danach werden die Brenner 4 hochgefahren und das Portal zur zweiten Lagerreihe 22 verfahren, in der sich die benötigten Düsen 8 befinden. Die Brenner 4 werden wieder nach unter gefahren, so daß die Düsen 8 in Eingriff mit den Brennern 4 gelangen und die Löse-Füge-Vorrichtungen verbinden die Düsen 8 mit den Brennern 4. Werden andere Düsengrößen benötigt, verfährt die Maschinensteuerung das Portal 1 mit den Brennern 4 beispielsweise zur 5. Lagerreihe. Anschließend werden die neu bestückten Brenner 4 hoch und in Schneidposition gefahren.

Auf diese erfindungsgemäße Weise wird die Maschinenbewegung zum Positionieren der Brenner über den erforderlichen Düsen ausgenutzt ohen daß zusätzliche Steuerelemente notwendig sind. Die Wechseleinrichtung beschränkt sich auf die Löse-Füge-Vorrichtung und deren Betätigungsmittel. Auf diese Weise kann auch das Düsenlager an geeigneter Position im Fahrbereich der Maschine angeordnet werden, da eine Trennung zwischen dem den Brennern zugeordneten Wechseleinrichtungen und dem gemeinsamen Düsenlager gemäß der Erfindung erreicht wurde.

Die Vorteile der Erfindung bestehen in der Schnelligkeit des Düsenwechsels, alle Brenner können gleichzeitig wechseln. An der Maschine sind fast keine zusätzlichen Einrichtungen erforderlich die mitbewegt werden müssen. Das Lager ist von der Maschinenbewegung unabhängig. Es sind nur in geringem Umfang zusätzliche anzutreibende und zu steuernde Bewegungen erforderlich. Diese können von der vorhandenen Steuerung mit übernommen werden. Das Lager kann den Erfordernissen des Betriebes angepaßt werden.

Die beschriebene Anordnung der Brenner 4 zum Düsenwechsel ist ein besonders zweckmäßiges Ausführungsbeispiel. Die Brenner 4 können aber auch an einer anderen Stelle des Portals 1 positioniert werden, wenn die Anordnung des Düsenlagers an anderer Stelle zweckmäßiger ist. Auch der Abstand der Brenner 4 voneinander kann größer gewählt und der Ausstattung des Lagers, z.B. in Abhängigkeit der einem Brenner zugeordneten Reihen, angepaßt werden. Falls erforderlich, kann auch bei einem einzelnen Brenner die Düse gewechselt werden, wobei dies in gleicher Weise wie bei mehreren oder allen Brennern erfolgt.

Um das Wechseln der Düsen 8 mittels der Brennerhöhenverstellung 10 durchführen zu können, ist eine einfache Ausbildung der Schnittstelle Düse/Brenner notwendig. Eine solche einfache und gasdichte Schnittstelle ist über das vorhandene Düsengewinde nicht erreichbar. Gemäß der Erfindung wird daher vorgeschlagen, jede Düse 8 in einer Aufnahme 13 zu befestigen und die Schnittstelle zum Brenner 4 bei allen Aufnahmen 13 gleich auszubilden. Die Verwendung derartiger Aufnahmen 13 erlaubt auch die Verwendung von Injektor- und gasmischenden Düsen ohne Veränderung der Wechseleinrichtung.

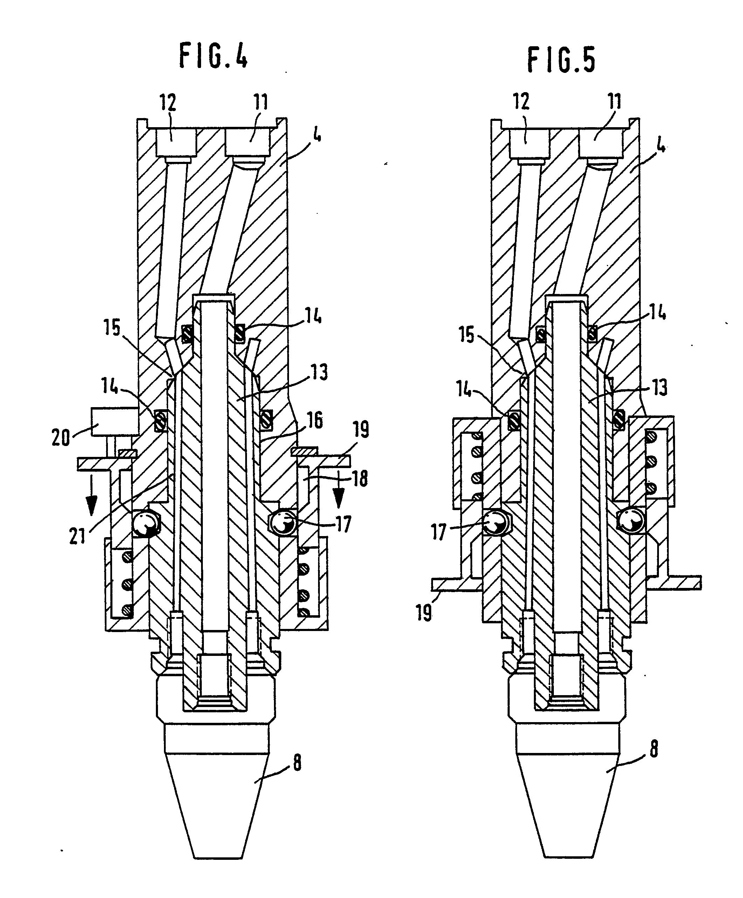

In Fig. 4 ist ein Ausführungsbeispiel einer Wechseleinrichtung gemäß Erfindung dargestellt, die nach dem Schnellverschlußprinzip arbeitet. In dem Brenner 4 mit Zuführungen 11 für Schneidsauerstoff und 12 für Brenngas ist eine Aufnahme 13 für die Düse 8 vorgesehen. Als elastische Dichtelemente sind O-Ringe 14 vorgesehen. Die beiden O-Ringe 14 sind koaxial angeordnet, so daß die Aufnahme 13 rotationssymetrisch ausgebildet werden kann. Die starke Anfasung 15 und die lange zylinderische Führung 16 der Aufnahme 13 stellen in vorteilhafter Weise sicher, daß die Aufnahme 13 zentriert ist bevor die O-Ringe zur Anlage kommen.

Anstelle von O-Ringen haben sich als elastische Dichtelemente auch Hutmanschetten als vorteilhaft erwiesen.

Als Verriegelungsmechanismus werden, wie bei Schnellkupplungen üblich, Kugelfallen 17, 18 verwendet. Für den automatischen Wechsel der Düsen 8 müssen im Düsenlager Vorrichtungen angeordnet werden, die die Schieberinge 19 der Verriegelungen 17,18 betätigen.

Die Betätigung des Schieberinges übernimmt aber vorteilhafter ein kleiner Druckluftzylinder, der auf Knopfdruck den Schiebering 19 der Kugelfalle 17, 18 bewegt und so die Verbindung Aufnehmer 13/Brenner 4 öffnet oder schließt. In das Schaltergehäuse wird ein zweiter Leuchtdrucktaster eingebaut, mit dem diese Funktion für jeden Brenner 4 einzeln geschaltet werden kann. Alternativ wird am Bedienpult der Brennschneidmaschine ein Schalter vorgesehen, der das Signal an alle Brenner 4 gibt. Durch die Haftreibung der O-Ringe ist sichergestellt, daß die Aufnehmer, die nicht gewechselt werden, in ihrer Position im Brenner 4 bleiben und die Schnellkupplung wieder geschlossen werden kann. Die Druckluftzylinder werden mit Näherungsschaltern ausgestattet, die für den automatischen Betrieb unerläßlich sind. Diese Näherungsschalter können dazu genutzt werden, eine Folgeschaltung zu überwachen. Wird am Bedienpult der Schalter "Düsenkupplung öffnen" oder an einem Brenner dieser Schalter betätigt, fährt die Brennerhöhenverstellung an ihren oberen Endpunkt. Danach schwenkt zuerst die kapazitive Abtastung aus. Erst wenn der Näherungsschalter den Vollzug dieser Bewegung meldet, wird die Düsenkupplung geöffnet. Im umgekehrten Fall - nach erfolgter Zuführung der neuen Düse - wird zuerst die Düsenkupplung geschlossen. Wenn der Näherungsschalter am oberen Endpunkt des Hubs des Betätigungszylinders anspricht, wird die kapazitive Abtastung wieder eingeschwenkt. Erst nachdem beide oberen Endschalter - am Kupplungs- und am Abtastungszylinder - ansprechen, ist die Brennschneidmaschine wieder betriebsbereit, d.h. die Gassteuerung und die automatische Zündeinrichtung können wieder betrieben werden. Damit ist auch ein Auswechseln der Düsen von Hand möglich, wenn am Brenner ein entsprechender Schalter für den Hubzylinder angeordnet ist.

Ein bevorzugtes Ausführungsbeispiel der Schieberingbetätigung ist in Fig.5 dargestellt. Beim Herunterfahren des Brenners 4 zur Düsenlagerstelle setzt der Schiebering 19 auf einem Anschlag oder dgl. am Düsenlager auf und der Brenner 4 öffnet auf seinem Restweg selbsttätig die Verriegelung der Schnittstelle. In umgekehrter Weise wird die Schnittstelle geschlossen. Damit werden die Teile der Wechseleinrichtung auf ein Minimum begrenzt.

Für die Ausbildung des Düsenlagers 7 gibt es eine Anzahl von vorteilhaften Möglichkeiten. Gemäß einer Ausführung werden pro Brenner 4 eine Reihe von Düsen 8 in Portalfahrtrichtung plaziert, wobei die Düsen für unterschiedliche Arbeitsbereiche ausgebildet sind. Um auch einen Defektwechsel ausführen zu können, ist jede Düsengröße zweimal hintereinander vorhanden. Da der Abstand zwischen zwei Brennern 4 meistens ca. 300 mm beträgt, können auch zwei Reihen von Düsen 8 nebeneinander angeordnet werden. Hierbei kann die eine Reihe für Arbeitsbereichwechsel und die andere Reihe für Defektwechsel eingerichtet werden. Für das Ablegen der defekten Düse ist ein besonderer Platz vorgesehen. Die Tiefe des Lagers kann hierdurch halbiert werden.

Sind die Aufnehmer 13 mit den Düsen 8 im Durchmesser klein, so kann der Abstand zwischen zwei Brennern 4 ausreichen, um die erforderliche Anzahl von Düsen in Maschinenquerrichtung zu lagern. Die Zustellbewegung zu den verschiedenen Düsengrößen ist dann eine Querbewegung aller Brenner. Auch hier ist eine zweite Reihe für den Defektwechsel vorgesehen.

Verzichtet man auf den minimalen Abstand der Brennerachsen (mechanischer Anschlag) und positioniert die Brenner in Querrichtung mit der bei Brennschneidmaschinen üblichen pneumatischen Bandklemmung auf ein durch das Lager vorgegebenes Maß, können 2 x 6 Düsen pro Brenner in einer Reihe positioniert werden. Dies führt zu einem sehr schmalen, in Querrichtung der Brennschneidmaschine extrem langen Lager. Ein solches Lager könnte an der Stirnseite der Schneidtische angebracht werden, da es durch seine geringe Tiefe (ca. 40 - 60 mm) den Arbeitsbereich kaum einschränkt. Die obere Kante des Lagers sollte aber die Brenntischhöhe nicht überragen, um das Beschicken mit Blechtafeln nicht zu behindern. Dies bedeutet aber, daß entweder die Höhenverstellungen der Brenner, damit sie die Brenner unter die Brenntischhöhe positionieren können, tiefer angebracht werden müssen, oder das Lager muß für den Wechsel aus einer Ruheposition vertikal nach oben bewegt werden.

Die Lageabweichung von Brenner- und Lagerachse durch ungenaue Positionierung, Temperaturunterschiede und Verschleiß wird vorzugsweise durch eine Feder ausgeglichen. Der Aufnahmering der kompletten Aufnehmer 13 ist durch eine Schraubenfeder mit dem Lagerboden verbunden. Die Aufnahme kann auch mit 3 oder 4 U-förmigen Federstahlbändern mit dem Lagergehäuse verbunden werden, so daß dieser Aufnahmering sowohl in axialer als auch in radialer Richtung Lageabweichungen ausgleichen kann. Außer Stahlfedern ist auch der Einsatz von dauerelastischen Kunststoff- oder Gummifederelementen möglich. Bei Polymer- oder Kautschukmaterialien ist auf die Temperaturbeständigkeit zu achten.

Da damit zu rechnen ist, daß der Aufnehmer 13 durch die Reibung an den Dichtelementen nicht in der Lagerposition bleibt, wenn der Brenner wieder hochfährt, ist im Lager eine Rückhaltesicherung für den Aufnehmer 13 vorgesehen. Diese Rückhaltesicherung besteht aus einer Verriegelleiste, die zwischen den elastischen Aufnahmeringen jeder Lagerreihe angebracht ist. Sie wird über unter dem Lagerboden befestigte Druckluftzylinder betätigt und funktioniert wie ein Schiebebajonettverschluß. In der geöffneten Position können die Aufnahmen 13 in vertikaler Richtung ein- und ausgelagert werden, in geschlossener Position wird dies durch die in Nuten der Aufnahme 13 eingreifende Leiste verhindert. Die Auf nahmeringe sind mit radial und axial elastischen Gummielementen ausgerüstet, die den Einlagevorgang auch bei Lageabweichungen durch Temperatureinflüsse oder durch ungenaue Positionierung der Brenner gewährleistet.

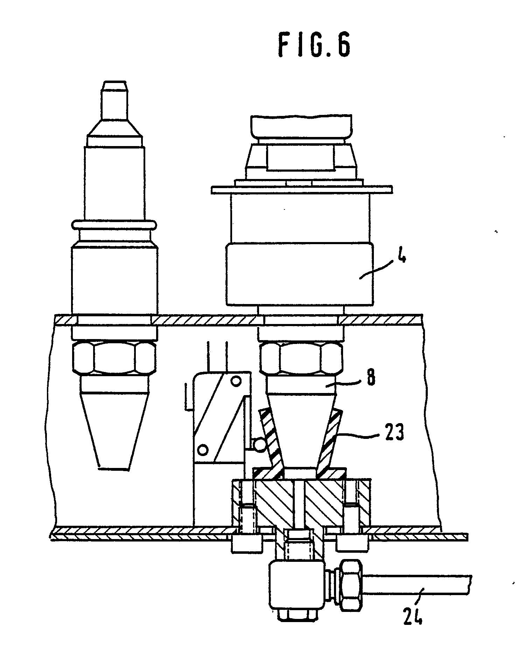

Gemäß einem weiteren Vorschlag der Erfindung, werden die eingesetzten Aufnehmer 13 und Düsen 8 vor Inbetriebnahme automatisch auf Dichtheit geprüft (Fig. 6). Hierzu werden die Brenner 4 mit montierten Düsen 8 mit einer Dichtmanschette 23 abgedichtet, wobei eine Linien- oder Flächenabdichtung angewendet wird. Der Innenraum der Manschette 23 und damit die Gaskanäle in Düse 8 und Brenner 4 bis zu den Magnetventilen der Gassteuerung sind über Leitungen 24 mit einem Unterdruckerzeuger verbunden. Dieser Unterdruckerzeuger besteht aus einem Pneumatikzylinder, bei dem die normale Rückstellfeder so dimensioniert ist, daß sie einen definierten Unterdruck (z.B. $P_2$ = 0,1 bar) erzeugt. Mit Druckluft aus dem Netz wird sie gespannt. Wird die Druckseite des Zylinders danach entlüftet, erzeugt diese Feder auf der mit den Brennern verbunden Seite Unterdruck. Dieser entstehende Unterdruck ver-hindert, daß die Feder den Kolben an den Endanschlag bewegen kann. Im Falle einer Undichtigkeit kann kein Unterdruck entstehen und der Kolben gelangt durch die Federkraft an den Endanschlag. Ein einfacher Schalter am Zylinder überwacht die Bewegung des Kolbens und dient damit zur Erkennung einer Undichtigkeit. Bringt man noch Schalter an, die erkennen, ob ein Brenner an der Dichtigkeitsprüfung teilnimmt und öffnet mit Ventilen die Verbindungsleitungen nur zu diesen Brennern, ist auch eine selektive Prüfung möglich. Eine Dichtigkeits-prüfung würde dann so ablaufen, daß zunächst an allen Brennern gleichzeitig und danach - im Falle einer Undichtigkeit - ein Brenner nach dem anderen geprüft wird.

Damit erreicht man zweierlei: Die Prüfung ist schnell, d.h. wenig zeitaufwendig, weil alle Brenner gleichzeitig geprüft werden. Im Falle einer Undichtigkeit werden der oder die betreffenden Brenner erkannt.

Die Unterdruckprüfung hat folgende Vorteile: Der Unterdruck verstärkt die Dichtwirkung der Manschetten an den Düsen, Überdruck schwächt die Dichtwirkung. Die Magnetventile der Gassteuerung reagieren aufgrund ihrer Konstruktion empfindlich auf Druck gegen die normale Strömungsrichtung. Der Unterdruck am Auslaß der Ventile verstärkt ihre Dichtwirkung und verhindert eine Leckage an den Ventilen. Eine Undichtigkeit der Ventile würde das Eindringen von Luft in die Heizgasleitung erlauben.

## Ansprüche

1. Verfahren zum automatischen Wechseln von mindestens einer Schneiddüse von Brennern, die auf einem verfahrbaren Portal quer zur Portalfahrrichtung bewegbar und höhenverstellbar angeordnet sind und die zum Düsenwechsel mittels der Maschinensteuerung zu einem Düsenlager verfahrbar sind,
dadurch gekennzeichnet,
daß der Brenner (4) zuerst an eine Entladestelle des Düsenlagers (7) gefahren und dort die Verbindung Düse/Brenner gelöst wird, und daß danach der düsenfreie Brenner zu der Lagerstelle der neu aufzunehmenden Düse (8) gefahren und dort die Verbindung Düse/Brenner hergestellt wird.

2. Verfahren nach Anspruch 1,
dadurch gekennzeichnet,
daß zum Düsenwechsel ein Brenner (4) an einer bestimmten Stelle des Portals (1) oder mehrere bzw. alle Brenner (4) an einer bestimmten Stelle des Portals (1) mit definierten Abstand zueinander angeordnet werden.

3. Verfahren nach Anspurch 1 oder 2,
dadurch gekennzeichnet,
daß das Lösen und Befestigen der Düse (8) durch Betätigen einer im Brenner angeordneten Arretiervorrichtung, vorzugsweise einer Schnellkupplung (17, 18, 19), erfolgt.

4. Verfahren nach Anspruch 3,
dadurch gekennzeichnet,
daß die Betätigung der Arretiervorrichtung (17, 18, 19) durch die Auf- bzw. Abbewegung des Brenners (4) erfolgt.

5. Verfahren nach Anspruch 3,
dadurch gekennzeichnet,
daß die Betätigung der Arretiervorrichtung (17, 18, 19) durch einen, vorzugsweise am Brenner (4) befestigten, Hubzylinder (20) erfolgt.

6. Verfahren nach einer der Ansprüche 1 bis 5,
dadurch gekennzeichnet,
daß zur Höhensteuerung des Brenners (4) beim Lösen und Befestigen der Düse (8) die Düsenabstands-Steuerung der Maschine dient.

7. Brenner, insbesondere für das Verfahren nach einem der Ansprüche 1 bis 6, mit einer Aufnahme für Düsen unterschiedlicher Leistungsbereiche,
dadurch gekennzeichnet,
daß jede Düse (8) in einer Aufnahme (13) befestigt und die Schnittstelle zum Brenner (4) bei allen Aufnahmen (13) gleich ausgebildet ist.

8. Brenner nach Anspruch 7,
dadurch gekennzeichnet,
daß die Schnittstelle aus einem in einer zylindrischen Führung (16) des Brenners (4) angeordneten Zapfen (21) der Aufnahme (13) besteht und die Aufnahme (13) über eine Kugelfalle (17, 18) mit Schiebering (19) im Brenner (4) gehalten wird.

9. Brenner nach Anspruch 7 oder 8, mit einem unter dem Brenner angeordneten oder den Brenner umgebenden Höhensensor,
dadurch gekennzeichnet,
daß der Sensor mit einer Vorrichtung verbunden ist, die den Sensor vor dem Düsenwechsel aus dem Brennerbereich entfernt und nach dem Düsenwechsel wieder positioniert.

10. Düsenlager, insbesondere für das Verfahren nach einem der Ansprüche 1 bis 6,
dadurch gekennzeichnet,
daß im Düsenlager (7) pro Brenner (4) mehrere Düsen (8) für unterschiedliche Arbeitsbereiche in einer Reihe hintereinander in Portalfahrtrichtung angeordnet sind.

11. Düsenlager nach Anspruch 10,
dadurch gekennzeichnet,
daß jedem Brenner (4) eine Düsenreihe zugeordnet ist und daß der Abstand der Düsenreihen dem definierten Brennerabstand entspricht.

12. Düsenlager nach Anspruch 10 oder 11,
dadurch gekennzeichnet,
daß jeweils Gruppen von zwei Düsenreihen nebeneinander vorgesehen sind und zwar eine Reihe für das Wechseln des Arbeitsbesreiches und eine Reihe für den Ersatz defekter Düsen.

13. Düsenlager, insbesondere für das Verfahren nach einem der Ansprüche 1 bis 6,
dadurch gekennzeichnet,
daß das Düsenlager (7) an einer Stirnseite eines Brennschneidtisches (5) unterhalb der Tischfläche angeordnet ist.

14. Düsenlager nach Anspruch 13,
dadurch gekennzeichnet,
daß das Düsenlager in den Brennerbereich bewegbar ist.

15. Düsenlager, insbesondere für das Verfahren nach einem der Ansprüche 1 bis 6,
dadurch gekennzeichnet,
daß die Aufnahme (13) über Federelemente im Düsenlager (7) gehalten sind.

16. Düsenlager nach Anspruch 15,
dadurch gekennzeichnet,
daß den Aufnahmen (13) eine Rückhaltesicherung zugeordnet ist.

17. Dichtigkeitsprüfeinrichtung, insbesondere für das Verfahren nach einem der Ansprüche 1 bis 6 und/oder Brennern gemäß den Ansprüchen 7 bis 9,
gekennzeichnet durch eine die Düse (8) dichtend umfassende Manschette (23) an die eine Leitung (24) angeschlossen ist, welche mit einem Unterdruckerzeuger in Verbindung steht.

18. Dichtigkeitsprüfeinrichtung nach Anspruch 17,
dadurch gekennzeichnet,
daß der Unterdruckerzeuger aus einem Pneumatikzylinder besteht, in dem eine Rückholfeder angeordnet ist, die einen definierten Unterdruck erzeugt.

FIG.1

FIG.2

FIG.3

EP 0 312 861 A1

# FIG.4

# FIG.5

# FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 700 643 (MESSER GRIESHEIM GMBH) * Anspruch 1 * --- | 1 | B 23 K 7/10 B 23 Q 3/155 |
| A | MANUFACTURING TECHNOLOGY INTERNATIONAL Nr. 1, 1987, Seiten 149, 150, London, GB; W. FINGBERG "Advanced tool management systems" * Seiten 149, 150 * --- | 1, 7 | |
| D,A | DE-A-3 447 304 (MESSER GRIESHEIM GMBH) * Ansprüche 1, 2 * --- | 1, 7, 10 | |
| A | MASCHINENMARKT Band 91, Nr. 59, 23. Juli 1985, Seite 1132, Würzburg; "Werkzeugsätze wechseln mit Kassettensystem" * Seite 1132 * ----- | 1, 7 | |
| | | | **RECHERCHIERTE SACHGEBIETE (Int. Cl.4)** |
| | | | B 23 K 7/00 B 23 Q 3/00 |

Der vorliegende Recherchenbericht wurde für alle Patentansprüche erstellt

| Recherchenort | Abschlußdatum der Recherche | Prüfer |
|---|---|---|
| BERLIN | 13-01-1989 | WUNDERLICH J E |

EPO FORM 1503 03.82 (P0403)